# EUROPÄISCHE PATENTSCHRIFT

(11) **EP 1 898 501 B1**
(45) Veröffentlichungstag und Bekanntmachung des Hinweises auf die Patenterteilung: **18.10.2017**
(21) Anmeldenummer: 07016618.6
(22) Anmeldetag: 24.08.2007
(51) Int. Cl.: H01R 43/00, H01R 43/05, H02G 1/12, H01R 13/56

(54) **Verfahren und Vorrichtung zum Einfügen eines Kabelendes in eine Kabeltülle**
Method and device for inserting cable end into a cable sleeve
Procédé et dispositif destinés à l'introduction d'une extrémité de câble dans un passe-câble

(30) Priorität: 06.09.2006 DE 102006041842
(43) Veröffentlichungstag der Anmeldung: 12.03.2008
(73) Patentinhaber: Schäfer Werkzeug- und Sondermaschinenbau GmbH, 76669 Bad Schönborn (DE)
(72) Erfinder: Neubauer, Stefan, 67166 Otterstadt (DE); Woll, Matthias, 76684 Östringen (DE); Haag, Werner, 68753 Waghäusel (DE); Schäfer, Bernhard, 76669 Bad Schönborn (DE)
(74) Vertreter: Hoffmann Eitle

(56) Entgegenhaltungen:
- EP-A1- 0 994 539
- DE-A1- 2 901 289
- DE-A1- 19 510 598
- US-A- 4 993 147
- US-A- 5 333 521

## Beschreibung

Die Erfindung betrifft ein Verfahren zum Einfügen eines Kabelendes in eine Kabeltülle, bei dem ein Kabelmantelstück im Bereich des Kabelendes von dem übrigen Kabelmantel abgetrennt und anschließend in die Kabeltülle eingeschoben wird.

### Technisches Gebiet

Kabeltüllen gelangen im Bereich von Wandurchführungen von Kabeln und in Gehäusen zur Anwendung. Sie bestehen aus weichelastischem Gummi oder Kunststoff und sollen ein scharfes Abknicken des Kabels auf der Außenseite der Wand bzw. eines Steckers verhindern sowie das Eindringen von Feuchtigkeit in die Kontaktzone des Steckers. Demgemäss ist der Innendurchmesser einer Kabeltülle zumeist bei ihrer Herstellung kleiner als der Außendurchmesser des Kabels, was das Einfügen schwierig macht.

### Stand der Technik

Ein Verfahren der eingangs genannten Art ist aus der DE 195 10598 A1 bekannt. Dabei wird das Kabelmantelstück von dem übrigen Kabelmantel abgetrennt und noch vor dem Einfügen des Kabelendes in die Kabeltülle von den in dem Kabelende enthaltenen, stromleitenden Litzen aus Metall entfernt. Dabei kann sich das Problem ergeben, dass sich die Litzen, die gewöhnlich innerhalb des Kabelmantels seilartig verzwirnt sind, achsparallel ausrichten und aufbürsten mit der Folge, dass das Einfügen in eine Kabeltülle schwierig wird. Da die Kabeltüllen aus weichelastischem Gummi- oder Kunststoff bestehen, kann die Wandung dabei zugleich von den metallischen Litzen durchstochen werden. Dies ist nicht nur in Hinblick auf die Beschädigung der Kabeltüllen unerwünscht sondern auch aus sicherheitstechnischen Überlegungen in Bezug auf die Umgebung.

Gemäß der DE 195 10 598 wird daher eine Aufschiebehilfe vorgeschlagen, die es erlaubt, die Litzen während des Einschiebens in eine Kabeltülle eng zu bündeln. Arbeitstechnisch ist dieser Vorschlag wenig befriedigend und eine automatische Durchführung bisher noch nicht gelungen.

Weitere Dokumente sind die US 4,993,147 A sowie die US 5,333,521 A.

Darüber hinaus betrifft die DE 26 15 481 B1 ein Kabel mit einem ummantelten, aus mehreren Litzen gebildeten Leiter, dessen freies Ende mit einem das Aufspreizen der Litzen verhindernden Schutzmittel versehen ist. Das Schutzmittel ist dabei die beim Abmanteln des Leiterendes sich bildende Tülle, wobei diese Tülle auf dem Leiterende verbleibt. Die Tülle wird kurz vor dem Einführen in eine Klemme abgezogen.

### Darstellung der Erfindung

Der Erfindung liegt die Aufgabe zur Grunde, das eingangs erwähnte Verfahren derart weiter zu entwickeln, dass sich das Einfügen eines Kabelendes mit abisolierten Litzen in eine Kabeltülle unter Vermeidung der vorstehend genannten Risiken vereinfacht. Außerdem soll das Verfahren leicht automatisierbar sein.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei dem erfindungsgemäßen Verfahren ist es vorgesehen, dass das Kabelmantelstück nach dem Abtrennen von dem übrigen Kabelmantel temporär auf den im Kabelende enthaltenen Litzen belassen wird, dass das Kabelmantelstück zunächst auf dem Kabelmantelende abgestützt, mittels des Kabelendes als Dorn durch die Kabeltülle in Längsrichtung hindurchgeschoben wird, dass das Kabelmantelstück auf der gegenüberliegenden Seite der Kabeltülle temporär festgehalten wird, dass das Kabelende anschließend bis zur Loslösung des Kabelmantelstücks von den Litzen des Kabelendes wieder in die Kabeltülle zurückgezogen und das Kabelmantelstück nachfolgend entfernt wird. Durch dass temporäre Verbleiben des abgetrennten Kabelmantelstückes auf den Litzen ergibt sich beim längsgerichteten Einschieben, bezogen auf die Durchlaßöffnung der Kabeltülle, eine so weitgehende Stabilisierung des Kabelendes, dass dieses relativ problemlos auch durch Kabeltüllen hindurchgeschoben werden kann, die innen einen kleineren Durchmesser haben als das Kabelende außen. Dabei bewirkt das als Dorn verwendete Kabelmantelstück und Kabelende zugleich eine radiale Aufweitung der Kabelmanteltülle und erfährt durch diese einen zusätzlichen Schutz gegen ein unerwünschtes, seitliches Ausknicken unter der Wirkung der Einschiebekräfte. Obwohl sowohl das Kabelende als auch die Kabeltülle elastisch verformbar und biegbar ausgebildet sind, lassen sich darüber im Zusammenwirken hinreichend große Kräfte übertragen, um ein einschieben des kabels in die Kabeltülle zu ermöglichen. Ferner werden die einzelnen Drähte der Litzen in ihrer ursrprünglichen Lage nicht verschoben und zugleich derart stabilisiert, dass es völlig ausgeschlossen ist, dass sie aufbürsten und den Mantel der Kabeltülle radial durchstechen. Dabei ist es von besonderem Vorteil, dass das erfindungsgemäße Verfahren leicht automatisierbar und z.B. in Crimpautomaten integrierbar ist. Auch in einer solchen Verwendung zeichnet es sich durch eine besonders große Funktionssicherheit aus.

Um das Loslösen des Kabelmantelstückes von dem Kabelende zu erleichtern hat es sich als zweckmäßig erwiesen, das abgetrennte Kabelmantelstück vor oder beim Zurückziehen des Kabelendes relativ zu diesem um seine Längsachse zu verdrehen, beispielsweise um einen Winkel von 30 bis 180°. Eventuell in die Zwischenräume der Litzen eingedrungene Werkstoffbestandteile des Kabelmantels, die sich schneidend nur schwer auffinden und durchtrennen lassen, ohne zugleich die Litzen zu beschädigen, werden dabei gleichfalls abgerissen. Das Kabelmantelstück kann anschließend ohne Widerstand entnommen werden.

Die Kabeltülle kann vor dem Aufschieben auf das Kabelende auf ein formbeständiges Rohr aufgefädelt, mittels des Rohres auf das Kabelende aufgeschoben werden, wobei das Rohr nachfolgend aus dem Spalt zwischen dem Kabelende und der Kabeltülle herausgezogen und das zuvor abgetrennte Kabelmantelstück nachfolgend entfernt wird. Eine solche Verfahrensweise eignet sich vor allem für die Verwendung von Kabeltüllen, die wenig formbeständig sind oder die ihre herstellungsbedingte Form während des Transportes oder der Lagerung verloren haben und beispielsweise abgeflacht worden sind, so dass der Innenumfang nicht mehr kreisförmig begrenzt ist.

Dabei besteht auch die Möglichkeit, eine Schlauchtülle mit einem Innendurchmesser, der herstellungsbedingt kleiner ist als der Außendurchmessers des Kabelendes, mit Hilfe des Rohres temporär in radialer Richtung aufzuweiten und nach dem Einschieben des Kabelendes in das Rohr das Rohr zu entfernen. Die Kabeltülle liegt sich dabei unter elastischer Vorspannung an den Außenumfang des Kabelendes an, was es erlaubt, den ursprünglichen Spalt zwischen beiden flüssigkeitsdicht zu verschließen. Der Effekt kann erhöht werden bei Verwendung von Kabeltüllen, die im Bereich des Innenumfangs mit zumindest einer umlaufenden Dichtlippe versehen sind, die sich flüssigkeits- und/oder gasdicht an das Kabelende anzuschmiegen vermögen.

Zur Durchführung des vorstehend beschriebenen Verfahrens eignet sich besonders eine Vorrichtung mit den Merkmalen des unabhängigen Anspruchs 6.

Dabei hat es sich als zweckmäßig erwiesen, wenn die Vorschubeinrichtung zum örtlichen Fixieren und Zurückziehen des Kabelendes entgegen der Vorschubrichtung in die Kabeltülle geeignet ist. Dadurch ist es möglich, über den Greifer eine in Längsrichtung gerichtete Zugkraft auf das Kabelmantelstück aufzubringen, um es von den Litzen des Kabelendes auch dann abzuziehen und abreißen zu können, wenn Reststücke des Kabelmantels zuvor noch nicht völlig durchtrennt worden sind, beispielsweise in die Zwischenräume der Litzen eingedrungene Bestandteile des Kabelmantels. Dieser wird gewöhnlich in flüssigem Zustand auf die Litzen aufgepresst und erst danach verfestigt. Das Eindringen von Werkstoffbestandteilen in die Zwischenräume der die Litze bildenden Einzeldrähte wird dadurch begünstigt und kann bei dem Abisolieren ein Problem darstellen, das erfindungsgemäß gleichfalls gelöst wird.

Die Trenneinrichtung besteht zweckmäßig aus zwei Messern, die beiderseits des Kabelendes angeordnet und gegeneinander bewegbar sind. Sie können jeweils eine V-förmig in Richtung des Kabels geöffnete Schneidklinge haben, um Kabel eines unterschiedlichen Durchmessers ohne Wechsel der Klingen verarbeiten zu können. Die Breite der Messer muss natürlich immer größer sein als der Durchmessers des Kabels. Die Schneidklingen haben zweckmäßig einen Öffnungswinkel von 80° - 100°.

### Kurzbeschreibung der Zeichnung

Eine beispielhafte Durchführungsart des erfindungsgemäßen Verfahrens wird nachfolgend an Hand der Zeichnung näher erläutert. Es zeigen:

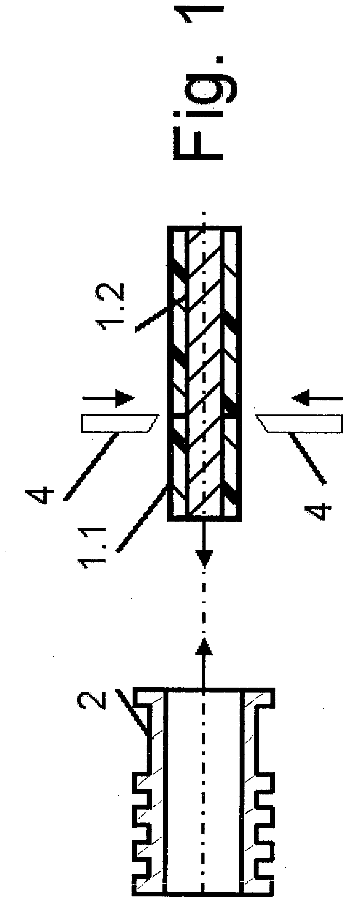

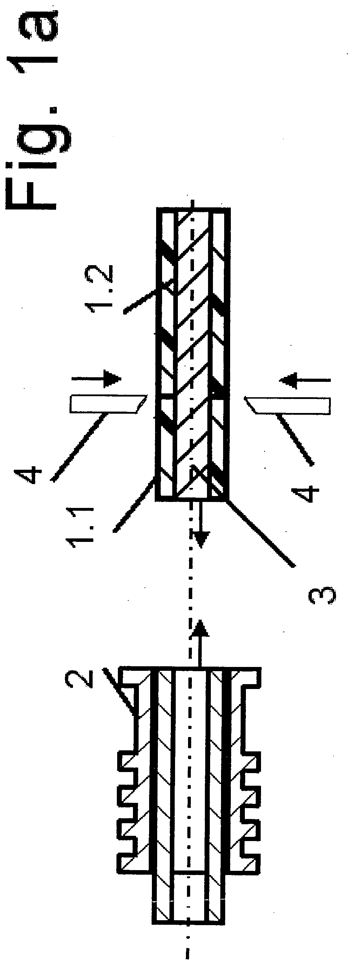

Fig. 1 eine beispielhafte Kabeltülle und ein Kabelende, von dem ein Kabelmantelstück durch einen umlaufenden Schnitt bereits abgetrennt ist.
Fig. 1a eine Kabeltülle und ein Kabelende ähnlich Fig. 1, wobei die Kabeltülle auf ein formbeständiges Rohr aufgefädelt ist, um das Einfügen des Kabelendes zu erleichtern.

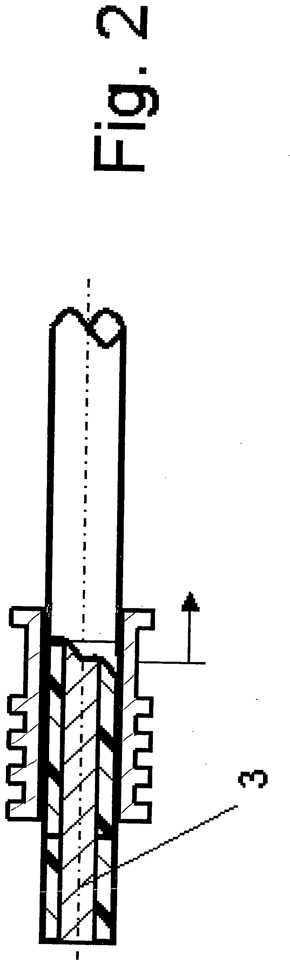

Fig. 2 das in Fig. 1 gezeigte Kabelende nach dem Einschieben in die in Fig. 1 gezeigte Kabeltülle.

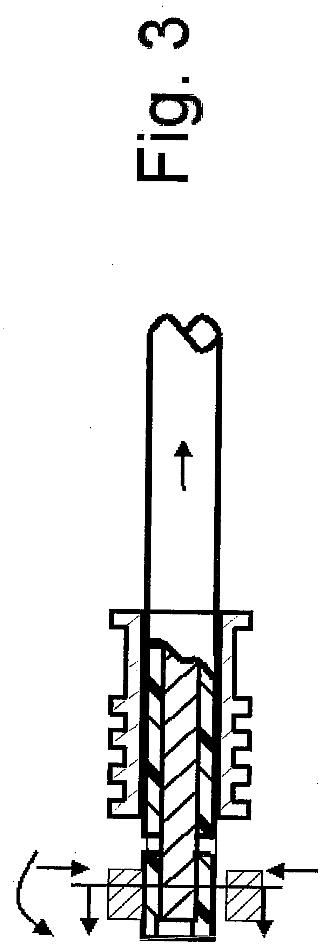

Fig. 3 das Zurückziehen des Kabelendes, während das abgetrennte Kabelmantelstück festgehalten wird.

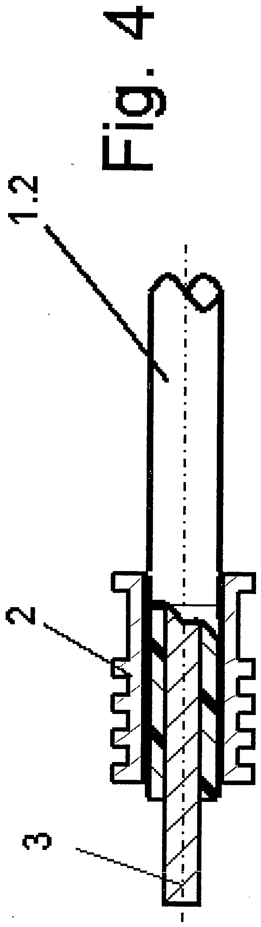

Fig. 4 das nach dem Abziehen des Kabelmantelstückes erhaltene, in die Kabeltülle eingefügte Kabelende mit den freiliegenden Litzen.
Fig. 5 die Zuordnung der Messer zu dem Kabelende, die zum Einschneiden des Kabelmantels dienen und jeweils eine V-förmig in Richtung des Kabelendes geöffnete Schneidklinge haben.

### Ausführung der Erfindung

Das in der Zeichnung dargestellte Verfahren dient zum Einfügen eines Kabelendes 1 in eine elastisch aufweitbare Kabeltülle 2, bei dem ein Kabelmantelstück 1.1 im Bereich des Kabelendes 1 von dem übrigen Kabelmantel 1.2 abgetrennt und anschließend in die Kabeltülle 2 eingeschoben wird, wobei das Kabelmantelstück 1.1 nach dem Abtrennen von dem übrigen Kabelmantel 1.2 temporär auf den im Kabelende 1 enthaltenen Litzen 3 belassen wird, wobei das Kabelmantelstück 1.1 zunächst auf dem verbleibenden Mantel des Kabelendes 1 abgestützt, mittels des Kabelendes 1 als Dorn verwendet und durch Kabeltülle hindurchgeschoben wird, wobei das Kabelmantelstück 1.1 auf der gegenüberliegenden Seite der Kabeltülle 2 temporär festgehalten wird, wobei das Kabelende 1 anschließend bis zur Loslösung des Kabelmantelstücks 1.1 von den Litzen 3 des Kabelendes 1 wieder in die Kabeltülle 2 zurückgezogen und das Kabelmantelstück 1.1 nachfolgend entfernt wird. An den dadurch freigelegten Litzen 3 und gegebenenfalls der Kabeltülle kann anschließend ein Crimpkontakt auf an sich bekannte Weise festgelegt werden. Eine Einbeziehung des erfindungsgemäßen Verfahrens in die dazu benötigten Crimpvorrichtungen oder Crimpautomaten ist problemlos möglich. Natürlich kann in gleicher Weise verfahren werden, wenn zugleich eine radiale Aufweitung der Kabeltülle erforderlich ist. In diesem Falle ergibt sich sogar noch eine größere Versteifung des Kabelmantelstücks und des Kabelendes durch die Kabeltülle gegen Ausknickbewegungen, was den Arbeitsprozess sicherer macht.

Bei dem gezeigten Ausführungsbeispiel gelangt eine Kabeltülle 2 zur Anwendung, die mit drei radial nach außen vorspringenden Dichtrippen versehen ist, die während der bestimmungemäßen Verwendung in entsprechende gestalteten Nuten des Wanddurchbruches eines Elektrogerätes aufgenommen werden und den Durchtritt von Feuchtigkeit verhindern. Zu dem gleichen Zwecke sind am hinteren und vorderen Ende der Kabeltülle 2 nach außen und innen vorspringenden Wulstverdickungen der Wandung vorgesehen. Die innere Wulstverdickung hat die Wirkung einer Dichtlippe, die am Außendurchmesser des Kabelendes 1 dichtend anliegen soll. Die dazu nötige, elastische Anpresskraft resultiert teilweise auch aus der sich beim Einfügen des Kabelendes 1 ergebenden, radialen Aufdehnung der die innere Wulstverdickung radial außenseitig umschließenden, äußeren Wulstverdickung. Die Verwendung abweichend hiervon gestalteter Kabeltüllen ist problemlos möglich.

Die Kabeltülle 2 kann vor dem Aufschieben auf das Kabelende 1 auf ein formbeständiges Rohr 5 aufgefädelt, mittels des Rohres 5 auf das Kabelende 1 aufgeschoben werden, wobei das Rohr 5 nachfolgend aus dem Spalt zwischen dem Kabelende 1 und der Kabeltülle 2 herausgezogen und das Kabelmantelstück 1.1 nachfolgend entfernt wird. Dabei besteht auch die Möglichkeit, eine Kabeltülle 2, deren Innendurchmesser herstellungsbedingt kleiner ist als der Außendurchmesser des Kabelendes 1, temporär elastisch aufzuweiten auf einen hinreichend großen Durchmesser für das Einfügen des Kabelendes 1, das Kabelende 1 einzufügen, nachfolgend das Rohr 5 aus dem Spalt zwischen beiden herauszuziehen und die Kabeltülle 2 so unter einer elastischen Vorspannung auf den Außendurchmesser des Kabelendes 1 aufschnappen zu lassen. Zischen beiden wird so eine gute Abdichtung erzielt. Sie lässt sich in ihrer Wirkung steigern durch umlaufende Dichtlippen, die bei der Herstellung an den Innenumfang der Kabeltülle angeformt werden.

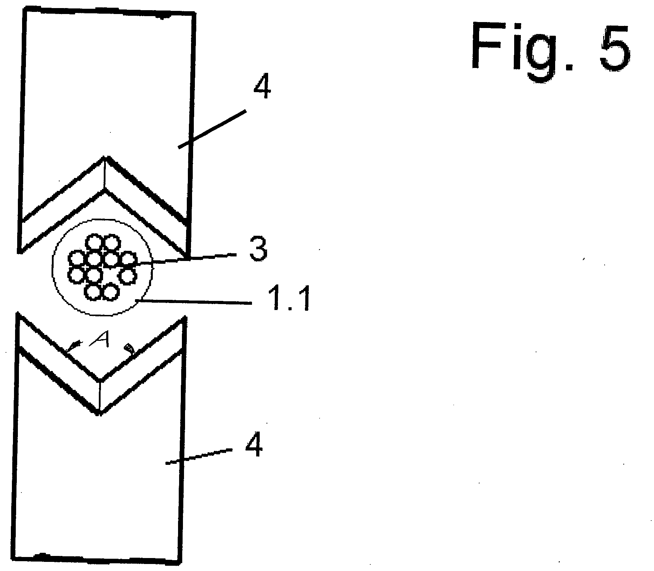

Fig. 5 zeigt die Zuordnung der Messer 4 zu dem Kabelende 1, die zum Einschneiden des Kabelmantels dienen und jeweils eine V-förmig in Richtung des Kabelendes 1 geöffnete Schneidklinge haben. Die Schneidklingen haben einen Öffnungswinkel A von 80° - 100°, vorliegend von 90°, was sich besonders bewährt hat.

## Patentansprüche

1. Verfahren zum Einfügen eines Litzen enthaltenden Kabelendes (1) in eine Kabeltülle (2), bei dem ein Kabelmantelstück (1.1) im Bereich des Kabelendes (1) von dem übrigen Kabelmantel (1.2) abgetrennt und anschließend das Kabelende in die Kabeltülle (2) eingeschoben wird, **dadurch gekennzeichnet, dass** das Kabelmantelstück (1.1) nach dem Abtrennen von dem übrigen Kabelmantel (1.2) temporär auf den im Kabelende (1) enthaltenen Litzen (3) belassen wird, dass das Kabelmantelstück (1.1) zunächst auf dem stirnseitigen Ende des Kabelmantels des Kabelendes (1) abgestützt und mittels des Kabelendes (1) als Dorn durch die Kabeltülle (2) in Längsrichtung hindurchgeschoben wird, dass das Kabelmantelstück (1.1) auf der gegenüberliegenden Seite der Kabeltülle (2) temporär festgehalten wird, dass das Kabelende (1) anschließend bis zur Loslösung des Kabelmantelstücks (1.1) von den Litzen (3) des Kabelendes (1) wieder in die Kabeltülle (2) zurückgezogen und das Kabelmantelstück (1.1) nachfolgend entfernt wird.

2. Verfahren nach Anspruch 1, **dadurch gekennzeichnet, dass** das abgetrennte Kabelmantelstück vor oder beim Zurückziehen des Kabelendes (1) relativ zu diesem um seine Längsachse verdreht wird.

3. Verfahren nach Anspruch 2, **dadurch gekennzeichnet, dass** das Kabelmantelstück (1.1) relativ zu dem Kabelende (1) um einen Winkel von 30 bis 180° um seine Längsachse verdreht wird.

4. Verfahren nach einem der Ansprüche 1 bis 3, **dadurch gekennzeichnet, dass** die Kabeltülle (2) vor dem Aufschieben auf das Kabelende (1) auf ein formbeständiges Rohr (5)aufgefädelt, mittels des Rohres (5) auf das Kabelende (1) aufgeschoben, das Rohr (5) nachfolgend aus dem Spalt zwischen dem Kabelende (1) und der Kabeltülle (2) herausgezogen und das Kabelmantelstück (1.1) nachfolgend entfernt wird.

5. Verfahren nach Anspruch 4, **dadurch gekennzeichnet, dass** die Kabeltülle (2) durch das Rohr (5) temporär in radialer Richtung aufgeweitet wird.

6. Vorrichtung zur Durchführung des Verfahrens nach einem der Ansprüche 1 bis 5, umfassend eine Aufnahmeeinrichtung zur Festlegung einer Kabeltülle, eine Trenneinrichtung zum Abtrennen eines Kabelmantelstückes (1.1) im Bereich des Kabelendes (1) von dem übrigen Kabelmantel (1) und eine Vorschubeinrichtung zum Einschieben des Kabelmantelstücks (1.1) und des das Kabelmantelstück (1.1) in Längsrichtung abstützenden Kabelendes (1) in eine in der Aufnahmeeinrichtung festgelegte Kabeltülle (2), wobei zum Ergreifen des Kabelmantelstücks (1.1) auf der von der Vorschubeinrichtung abgewandten Seite der Kabeltülle (2) ein Greifer vorgesehen ist und wobei das Kabelmantelstück (1.1) mit Hilfe des Greifers parallel zur Längsrichtung des Kabelendes (1) von den Litzen (3) abziehbar und gegebenenfalls relativ verdrehbar ist.

7. Vorrichtung zur Durchführung des Verfahrens nach Ansprüche 6, **dadurch gekennzeichnet, dass** die Vorschubeinrichtung zum örtlichen Fixieren und Zurückziehen des Kabelendes (1) entgegen der Vorschubrichtung in die Kabeltülle (2) geeignet ist.

8. Vorrichtung nach einem der Ansprüche 6 bis 7, **dadurch gekennzeichnet, dass** die Trenneinrichtung aus zwei Messern (4) besteht, die beiderseits des Kabelendes (1) angeordnet und gegeneinander bewegbar sind.

9. Vorrichtung nach Anspruch 8, **dadurch gekennzeichnet, dass** die Messer (4) jeweils eine V-förmig in Richtung des Kabelendes (1) geöffnete Schneidklinge haben.

10. Vorrichtung nach Anspruch 9, **dadurch gekennzeichnet, dass** die Schneidklingen einen Öffnungswinkel A von 80° - 100° haben.

11. Vorrichtung nach einem der Ansprüche 6 bis 10, **dadurch gekennzeichnet, dass** sie ein Rohr (5) zum Auffädeln der Kabeltülle (2) umfasst, in das das Kabelende (1) einführbar ist.

## Claims

1. Method for inserting a cable end (1) containing strands into a cable bushing (2), in which a cable sheath piece (1.1) is separated from the remaining cable sheath (1.2) in the region of the cable end (1) and then the cable end is pushed into the cable bushing (2), **characterised in that** the cable sheath piece (1.1) is left temporarily on the strands (3) present in the cable end (1) after separation from the remaining cable sheath (1.2), **in that** the cable sheath piece (1.1) is for the moment supported on the end face-side end of the cable sheath of the cable end (1) and is pushed through the cable bushing (2) in longitudinal direction by means of the cable end (1) as a spike, **in that** the cable sheath piece (1.1) is temporarily held on the opposite side of the cable bushing (2), **in that** the cable end (1) is then pulled back into the cable bushing (2) until release of the cable sheath piece (1.1) from the strands (3) of the cable end (1) and the cable sheath piece (1.1) is subsequently removed.

2. Method according to claim 1, **characterised in that** the separated cable sheath piece is rotated about its longitudinal axis before or during pulling back of the cable end (1) relative to the latter.

3. Method according to claim 2, **characterised in that** the cable sheath piece (1.1) is rotated by an angle of 30 to 180° about its longitudinal axis relative to the cable end (1).

4. Method according to one of claims 1 to 3, **characterised in that** the cable bushing (2) is threaded onto a dimensionally stable pipe (5) before pushing onto the cable end (1), is pushed onto the cable end (1) by means of the pipe (5), the pipe (5) is subsequently withdrawn from the gap between the cable end (1) and the cable bushing (2) and the cable sheath piece (1.1) is subsequently removed.

5. Method according to claim 4, **characterised in that** the cable bushing (2) is temporarily widened in radial direction by the pipe (5).

6. Device for carrying out the method according to one of claims 1 to 5, comprising a receiving device for fixing a cable bushing, a separating device for separating a cable sheath piece (1.1) in the region of the cable end (1) from the remaining cable sheath (1) and a feed device for pushing the cable sheath piece (1.1) and the cable end (1) supporting the cable sheath piece (1.1) in longitudinal direction into a cable bushing (2) fixed in the receiving device, wherein a gripper is provided for seizing the cable sheath piece (1.1) on the side of the cable bushing (2) facing away from the feed device and wherein the cable sheath piece (1.1) can be stripped off from the strands (3) parallel to the longitudinal direction of the cable end (1) with the aid of the gripper and optionally can be rotated relatively.

7. Device for carrying out the method according to claim 6, **characterised in that** the feed device is suitable for local fixing and pulling back of the cable end (1) into the cable bushing (2) against the feed direction.

8. Device according to one of claims 6 to 7, **characterised in that** the separating device consists of two knives (4) which are arranged on both sides of the cable end (1) and can be moved with respect to one another.

9. Device according to claim 8, **characterised in that** the knives (4) in each case have a V-shaped cutting blade opened in the direction of the cable end (1).

10. Device according to claim 9, **characterised in that** the cutting blades have an opening angle A of 80° - 100°.

11. Device according to one of claims 6 to 10, **characterised in that** it comprises a pipe (5) for threading the cable bushing (2), into which the cable end (1) can be introduced.

## Revendications

1. Procédé pour insérer une extrémité de câble (1) contenant des torons dans un passe-câble (2), dans lequel un morceau de gaine de câble (1.1) est séparé de la gaine de câble restante (1.2) dans la zone de l'extrémité de câble (1), puis l'extrémité de câble est insérée dans le passe-câble (2), **caractérisé en ce que** le morceau de gaine de câble (1.1) après la séparation de la gaine de câble restante (1.2) est laissé temporairement sur les torons (3) contenus dans l'extrémité de câble (1), le morceau de gaine de câble (1.1) est d'abord appuyé sur l'extrémité frontale de la gaine de câble de l'extrémité de câble (1) et, au moyen de l'extrémité de câble (1) comme broche, est poussé à travers le passe-câble (2) dans la direction longitudinale, le morceau de gaine de câble (1.1) est maintenu temporairement sur le côté opposé du passe-câble (2), l'extrémité de câble (1) est ensuite à nouveau retirée dans le passe-câble (2) jusqu'au détachement du morceau de gaine de câble (1.1) des brins (3) de l'extrémité de câble (1) et le morceau de gaine de câble (1.1) est ensuite enlevé.

2. Procédé selon la revendication 1, **caractérisé en ce que**, avant ou lors du retrait de l'extrémité de câble (1), le morceau de gaine de câble séparé est tourné par rapport à celle-ci autour de son axe longitudinal.

3. Procédé selon la revendication 2, **caractérisé en ce que** le morceau de gaine de câble (1.1) est tourné par rapport à l'extrémité de câble (1) d'un angle allant de 30 à 180° autour de son axe longitudinal.

4. Procédé selon l'une des revendications 1 à 3, **caractérisé en ce que**, avant d'être poussé sur l'extrémité de câble (1), le passe-câble (2) est enfilé sur un tube (5) résistant à la déformation, poussé au moyen du tube (5) sur l'extrémité de câble (1), puis le tube (5) est retiré de la fente entre l'extrémité de câble (1) et le passe-câble (2) et le morceau de gaine de câble (1.1) est ensuite enlevé.

5. Procédé selon la revendication 4, **caractérisé en ce que** le passe-câble (2) est temporairement élargi par le tube (5) dans la direction radiale.

6. Dispositif destiné à la mise en oeuvre du procédé selon l'une quelconque des revendications 1 à 5, comprenant un dispositif récepteur destiné à immobiliser un passe-câble, un dispositif séparateur destiné à séparer de la gaine de câble restante (1) un morceau de gaine de câble (1.1) dans la zone de l'extrémité de câble (1) et un dispositif de poussée destiné à pousser le morceau de gaine de câble (1.1) et l'extrémité de câble (1) soutenant le morceau de gaine de câble (1.1) dans la direction longitudinale dans un passe-câble (2) immobilisé dans le dispositif récepteur, dans lequel un dispositif de préhension est prévu pour saisir le morceau de gaine de câble (1.1) du côté du passe-câble (2) opposé au dispositif de poussée et dans lequel, à l'aide du dispositif de préhension, le morceau de gaine de câble (1.1) peut être retiré des torons (3) parallèlement à la direction longitudinale de l'extrémité de câble (1) et est éventuellement tourné par rapport à celle-ci.

7. Dispositif destiné à la mise en oeuvre du procédé selon la revendication 6, **caractérisé en ce que** le dispositif de poussée convient à la fixation localisée et au retrait de l'extrémité de câble (1) à l'opposé de la direction de poussée dans le passe-câble (2).

8. Dispositif selon l'une quelconque des revendications 6 à 7, **caractérisé en ce que** le dispositif séparateur est constitué de deux couteaux (4) qui sont agencés chacun d'un côté de l'extrémité de câble (1) et sont déplaçables l'un par rapport à l'autre.

9. Dispositif selon la revendication 8, **caractérisé en ce que** les couteaux (4) ont chacun une lame de coupe ouverte en forme de V en direction de l'extrémité de câble (1).

10. Dispositif selon la revendication 9, **caractérisé en ce que** les lames de coupe ont un angle d'ouverture A de 80° à 100°.

11. Dispositif selon l'une quelconque des revendications 6 à 10, **caractérisé en ce qu'**il comprend un tube (5) destiné à l'enfilement du passe-câble (2), tube dans lequel l'extrémité de câble (1) peut être introduite.
